# EUROPEAN PATENT APPLICATION

(11) **EP 4 407 653 A1**
(43) Date of publication of application: **31.07.2024**
(21) Application number: 22875503.9
(22) Date of filing: 22.06.2022
(51) Int. Cl.: H01J 49/04, G01N 27/62

(54) **SUPPORT UNIT, SUPPORT BODY, AND IONIZATION METHOD**

(30) Priority: 01.10.2021 JP 2021162568
(71) Applicant: Hamamatsu Photonics K.K., Hamamatsu-shi, Shizuoka 435-8558 (JP)
(72) Inventor: KOTANI, Masahiro, Hamamatsu-shi, Shizuoka 435-8558 (JP); OHMURA, Takayuki, Hamamatsu-shi, Shizuoka 435-8558 (JP)
(74) Representative: Grünecker Patent- und Rechtsanwälte PartG mbB
(86) International application number: PCT/JP2022/024945
(87) International publication number: WO 2023/053624

(57) **Abstract**

The support unit includes a first support body and a second support body. The first support body includes an ionization substrate. The second support body is disposed to face the first support body. The second support body includes a support substrate and an adhesive layer. A placement surface of the support substrate has a first region and a second region. The first region overlaps the measurement region when viewed in a Z-axis direction. The second region has conductivity and includes a region configured not to overlap the first support body when viewed in the Z-axis direction. The adhesive layer has a first portion and a second portion. The first portion is provided in the first region. The second portion has conductivity and electrically connects the second region and the conductive layer of the first support body.

## Description

### Technical Field

The present disclosure relates to a support unit, a support body, and an ionization method.

### Background Art

Conventionally, sample support bodies for ionizing a sample are known (see, for example, Patent Literature 1). The sample support bodies each include a substrate having a plurality of through-holes formed to be opened to a first surface and a second surface opposite to the first surface. In a case where the sample support body is disposed on the sample such that the second surface faces the sample, a component of the sample moves from the second surface side of the substrate toward the first surface side via the through-holes due to capillary action. Then, for example, when the first surface is irradiated with an energy ray such as a laser beam, the component of the sample moved to the first surface side is ionized.

### Citation List

### Patent Literature

Patent Literature 1: Japanese Patent No. 6093492

### Summary of Invention

### Technical Problem

Regarding the sample support body as described above, the substrate may need to be formed thinner in order to promote the movement of the sample due to the capillary action from the second surface side to the first surface side of the substrate. However, when the substrate is thinned, it is necessary to pay attention to handling of the substrate.

Objects of the present disclosure are to provide a support unit, a support body, and an ionization method which enable handling of a substrate to be facilitated.

### Solution to Problem

A support unit according to one aspect of the present disclosure is a support unit used for ionizing a sample, the support unit including: a first support body configured to include an ionization substrate having a first surface and a second surface opposite to the first surface and having a measurement region provided with a plurality of through-holes opened to the first surface and the second surface, and a conductive layer provided on the first surface so as not to block the plurality of through-holes; and a second support body disposed to face the second surface of the first support body. The second support body includes a support substrate having a placement surface facing the second surface, and an adhesive layer provided on the placement surface. The placement surface has a first region configured to overlap the measurement region when viewed in a direction orthogonal to the placement surface, and a second region having conductivity and including a region configured not to overlap the first support body when viewed in the direction orthogonal to the placement surface. The adhesive layer has a first portion provided in the first region and a second portion having conductivity and electrically connecting the second region and the conductive layer of the first support body.

In this support unit, the adhesive layer has the first portion provided in the first region overlapping the measurement region when viewed in the direction orthogonal to the placement surface. Therefore, the sample is placed on the first portion such that a part of the first portion is exposed, and the first support body can be disposed on the sample such that the second surface of the measurement region faces the sample, and the measurement region adheres to the exposed part of the first portion. Consequently, the measurement region can be fixed not only to the sample but also to the first portion of the adhesive layer. Hence, even if the ionization substrate becomes thinner and the ionization substrate becomes susceptible to damage as a result, scattering of the damaged ionization substrate from the sample and the adhesive layer is suppressed. In addition, the second region of the placement surface includes a region configured not to overlap the first support body and has conductivity. The second portion of the adhesive layer has conductivity and electrically connects the second region and the conductive layer of the first support body. Therefore, the first surface is irradiated with an energy ray while a voltage is applied to the conductive layer via the second region and the second portion, and thereby the component of the sample moved from the second surface side to the first surface side via the through-holes due to the capillary action can be ionized. As an example, it is also conceivable to apply a voltage to the conductive layer by bringing a terminal or the like for applying the voltage into contact with the conductive layer. In comparison with that case, according to the above-described configuration, since a voltage is applied to the conductive layer via the second region and the second portion, damage to the ionization substrate is suppressed, even if the ionization substrate becomes thinner and the ionization substrate becomes susceptible to damage as a result. As described above, according to this support unit, handling of the ionization substrate can be facilitated.

The first portion and the second portion of the adhesive layer may be formed as separate portions, and the first portion and the second portion may be separated from each other. Consequently, a degree of freedom in designing each of the first portion and the second portion is improved.

A surface of the second portion may be positioned on the support substrate side, with respect to a surface of the first portion. Consequently, the measurement region of the ionization substrate can reliably adhere to the first portion.

Each of the support substrate and the first portion may have optical transparency. Consequently, the sample placed on the first portion can be easily observed.

The ionization substrate may have a calibration region used for calibration, and the adhesive layer may not be provided in a region of the placement surface which overlaps region when viewed in the direction orthogonal to the placement surface. Consequently, for example, when a reagent for calibration is dropped in the calibration region, and then the reagent is ionized, generation of noise due to the adhesive layer can be suppressed.

The second support body may further include a cover member configured to cover at least the adhesive layer. Consequently, the adhesive layer can be protected.

The first support body may further include a holding member configured to be disposed on the first surface of the ionization substrate and have an opening surrounding the measurement region, and the ionization substrate may be formed by anodizing valve metal or silicon. Consequently, the holding member enables the ionization substrate to be reinforced while defining the measurement region of the ionization substrate.

A support body according to another aspect of the present disclosure is a support body used for ionization of a sample, the support body including: a support substrate having a placement surface; and an adhesive layer provided on the placement surface. The placement surface has a first region used for placing the sample and a second region having conductivity. The adhesive layer has a first portion provided in the first region and a second portion configured to have conductivity and extend to the second region.

In this support, the adhesive layer has the first portion provided in the first region for placing the sample. Therefore, the sample is placed on the first portion such that a part of the first portion is exposed, and the ionization substrate can be disposed on the sample such that the ionization substrate faces the sample and the ionization substrate adheres to the exposed part of the first portion. Consequently, the ionization substrate can be fixed not only to the sample but also to the first portion of the adhesive layer. Hence, even if the ionization substrate becomes thinner and the ionization substrate becomes susceptible to damage as a result, scattering of the damaged ionization substrate from the sample and the adhesive layer is suppressed. In addition, the second region of the placement surface has conductivity. The second portion of the adhesive layer has conductivity and extends to the second region. Therefore, the second portion enables the second region and the conductive layer of the ionization substrate to be electrically connected to each other. Consequently, a surface of the ionization substrate is irradiated with an energy ray while a voltage is applied to the conductive layer via the second region and the second portion, and thereby the component of the sample moved to the surface side via the through-holes due to the capillary action can be ionized. As an example, it is also conceivable to apply a voltage to the conductive layer by bringing a terminal or the like for applying the voltage into contact with the conductive layer. In comparison with that case, according to the above-described configuration, since a voltage is applied to the conductive layer via the second region and the second portion, damage to the ionization substrate is suppressed, even if the ionization substrate becomes thinner and the ionization substrate becomes susceptible to damage as a result. As described above, according to this support body, handling of the ionization substrate can be facilitated.

The first portion and the second portion of the adhesive layer may be formed as separate portions, and the first portion and the second portion may be separated from each other. Consequently, a degree of freedom in designing each of the first portion and the second portion is improved.

The second region of the placement surface may be formed of a metal film. Consequently, conductivity of the second region can be easily ensured.

The placement surface may be formed of a transparent conductive film. Consequently, the conductivity of the placement surface can be easily ensured.

The first region may be positioned at a central portion of the placement surface, and the second region may be positioned at an end portion of the placement surface. Consequently, it is possible to appropriately secure a space used for applying the voltage while prioritizing the securing of the space used for the first portion of the adhesive layer and the sample.

Each of the support substrate and the first portion may have optical transparency. Consequently, the sample placed on the first portion can be easily observed.

An ionization method according to still another aspect of the present disclosure includes: a first step of preparing a first support body configured to include an ionization substrate having a first surface and a second surface opposite to the first surface and having a measurement region provided with a plurality of through-holes opened to the first surface and the second surface, and a conductive layer provided on the first surface so as not to block the plurality of through-holes; a second step of preparing a second support body configured to include a support substrate having a placement surface, and an adhesive layer provided on the placement surface; a third step of placing a sample on the adhesive layer; a fourth step of disposing the first support body on the sample such that the second surface faces the sample; and a fifth step of irradiating the first surface with an energy ray while a voltage is applied to the conductive layer to ionize a component of the sample that has moved from the second surface side to the first surface side via the through-hole due to capillary action. The placement surface of the support substrate prepared in the second step has a first region configured to overlap the measurement region when viewed in a direction orthogonal to the placement surface, and a second region having conductivity and including a region configured not to overlap the first support body when viewed in the direction orthogonal to the placement surface. The adhesive layer prepared in the second step has a first portion provided in the first region and a second portion having conductivity and electrically connecting the second region and the conductive layer of the first support body. In the third step, the sample is placed on the first portion such that a part of the first portion of the adhesive layer is exposed. In the fourth step, the first support body is disposed to allow the measurement region to adhere to an exposed portion of the first portion and allow the conductive layer and the second region to be electrically connected by the second portion. In the fifth step, a voltage is applied to the second region.

In the third step of the ionization method, the sample is placed on the first portion so that a part of the first portion of the adhesive layer is exposed, and in the fourth step, the first support body is disposed to allow the measurement region to adhere to the exposed portion of the first portion. Consequently, the measurement region can be fixed not only to the sample but also to the first portion of the adhesive layer. Hence, even if the ionization substrate becomes thinner and the ionization substrate becomes susceptible to damage as a result, scattering of the damaged ionization substrate from the sample and the adhesive layer is suppressed. In addition, in the fourth step, the first support body is disposed to allow the conductive layer and the second region to be electrically connected by the second portion, and in the fifth step, the voltage is applied to the second region. Consequently, the voltage can be applied to the conductive layer via the second region and the second portion. As an example, it is also conceivable to apply a voltage to the conductive layer by bringing a terminal or the like for applying the voltage into contact with the conductive layer. In comparison with that case, according to the above-described steps, since the voltage is applied to the conductive layer via the second region and the second portion, damage to the ionization substrate is suppressed, even if the ionization substrate becomes thinner and the ionization substrate becomes susceptible to damage as a result. As described above, according to this ionization method, handling of the ionization substrate can be facilitated.

### Advantageous Effects of Invention

According to the present disclosure, it is possible to provide a support unit, a support body, and an ionization method which enable handling of an ionization substrate to be facilitated.

### Brief Description of Drawings

FIG. 1 is a perspective view of a support unit according to an embodiment.
FIG. 2 is a plan view of the support unit of FIG. 1.
FIG. 3 is an undersurface view of the support unit of FIG. 1.
FIG. 4 is a cross-sectional view of a first support body of FIG. 1.
FIG. 5 is a view illustrating an enlarged image of an ionization substrate of FIG. 4.
FIG. 6 is a view illustrating a state in which a sample is placed in the support unit of FIG. 1.
FIG. 7 is a plan view of the support unit of FIG. 6.
FIG. 8 is a cross-sectional view of the support unit of FIG. 6.
FIG. 9 is a view illustrating a state in which the first support body of FIG. 6 adheres to a second support body.
FIG. 10 is a view illustrating steps of a mass spectrometry method using the support unit of FIG. 1.

### Description of Embodiments

Hereinafter, embodiments of the present disclosure will be described with reference to the drawings. The same or corresponding parts in the drawings are denoted by the same reference signs, and repetitive descriptions will be omitted. Note that, in the drawings, there are some parts exaggerated for easy understanding of the characteristic portions according to the embodiments, and dimensions in the drawings may be different from the actual dimensions.

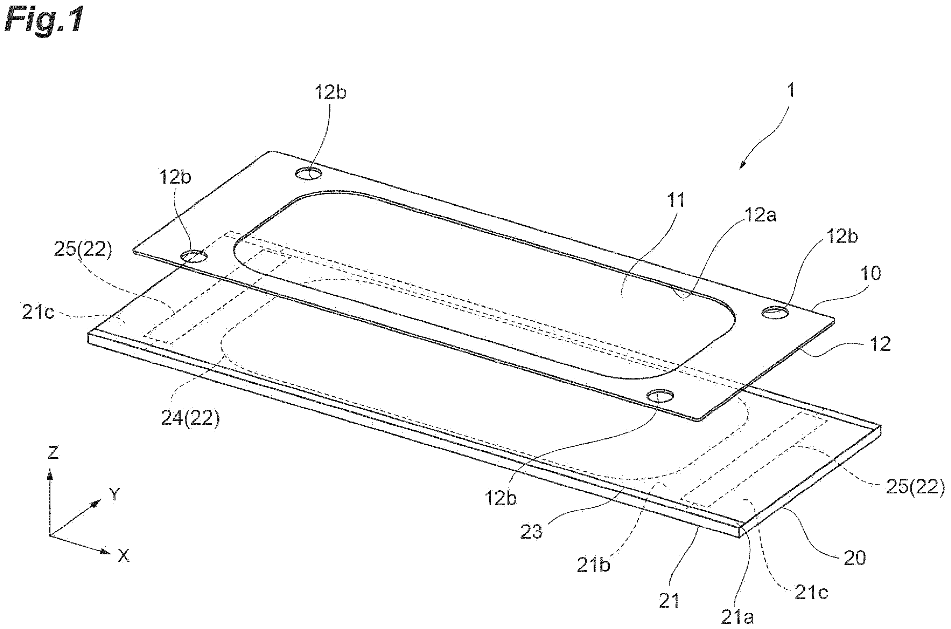

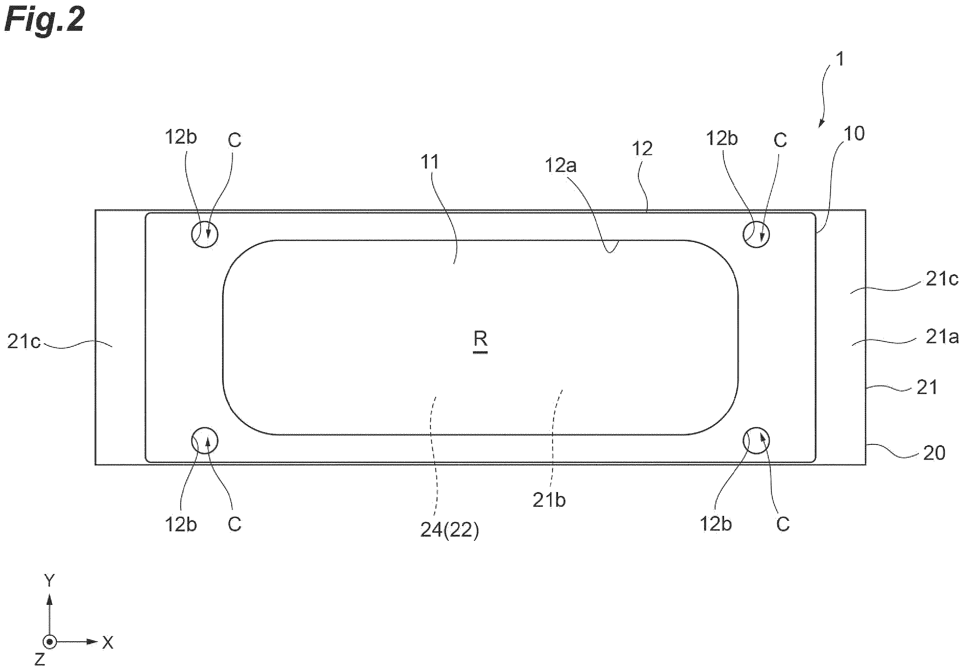

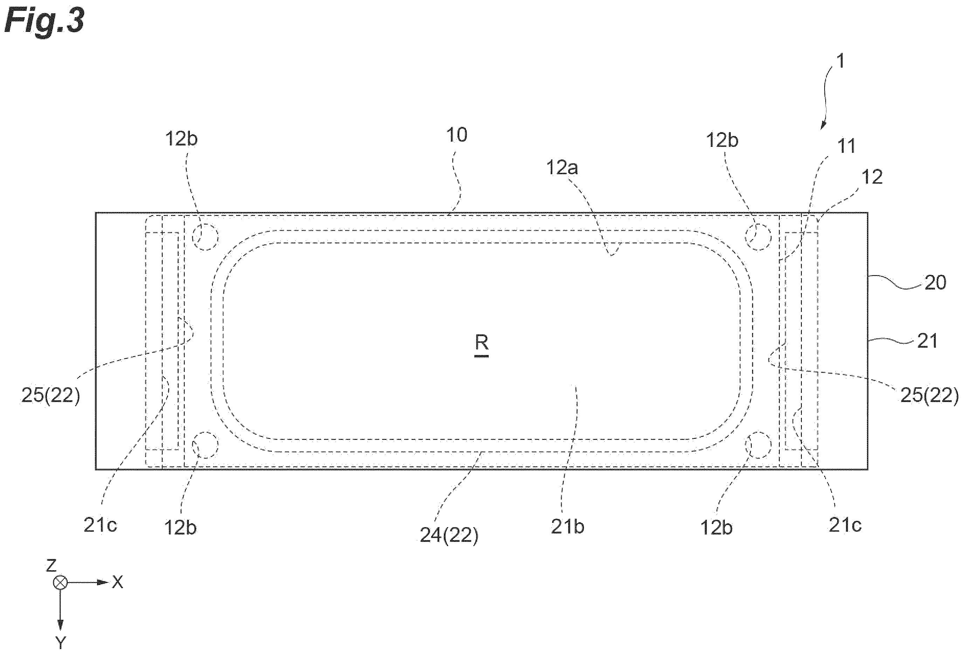

[Configuration of Support Unit] A support unit 1 will be described with reference to FIGS. 1 to 3. The support unit 1 is used for ionization of a sample. As illustrated in FIGS. 1 to 3, the support unit 1 includes a first support body 10 and a second support body 20. The first support body 10 and the second support body 20 are disposed to face each other in a Z-axis direction when the sample is ionized. Each of the first support body 10 and the second support body 20 has, for example, a rectangular plate shape. A direction along a long side (X-axis direction) of the first support body 10 is the same as a direction along a long side of the second support body 20. A direction along a short side (Y-axis direction) of the first support body 10 is the same as a direction along a short side of the second support body 20. A thickness direction (Z-axis direction) of the first support body 10 is the same as a thickness direction of the second support body 20. As an example, a length in the X-axis direction of each of the first support body 10 and the second support body 20 is, for example, about several centimeters, and a length thereof in the Y-axis direction is, for example, about several centimeters.

The first support body 10 includes an ionization substrate 11 and a frame (holding member) 12. The ionization substrate 11 has, for example, a rectangular plate shape. A length of one side of the ionization substrate 11 when viewed in the Z-axis direction is, for example, about several centimeters. The frame 12 has, for example, a rectangular frame shape. The frame 12 is disposed on one surface of the ionization substrate 11. An outer shape of the frame 12 is larger than an outer shape of the ionization substrate 11 when viewed in the Z-axis direction. An outer shape of the first support body 10 is mainly defined by the frame 12. A length of the frame 12 in the X-axis direction is, for example, about 5 cm, and a length of the frame 12 in the Y-axis direction is, for example, about 2.5 cm.

The frame 12 has an opening 12a and a plurality of (four in the present embodiment) openings 12b. The opening 12a penetrates the frame 12. The opening 12a is positioned at a central portion of the frame 12. The opening 12a has, for example, a rectangular shape when viewed in the Z-axis direction. The opening 12a overlaps the ionization substrate 11 when viewed in the Z-axis direction.

A portion of the ionization substrate 11 corresponding to the opening 12a (that is, a portion overlapping the opening 12a when viewed in the Z-axis direction) is a measurement region R used for ionization of the sample. The opening 12a defines the measurement region R of the ionization substrate 11. The opening 12a surrounds the measurement region R when viewed in the Z-axis direction.

Each opening 12b penetrates the frame 12. Each opening 12b is positioned at a corner of the frame 12. Each opening 12b has, for example, a circular shape when viewed in the Z-axis direction. A diameter of each opening 12b is, for example, about 2 mm. Each opening 12b overlaps the ionization substrate 11 when viewed in the Z-axis direction.

A portion of the ionization substrate 11 corresponding to the opening 12b (that is, a portion overlapping the opening 12b when viewed in the Z-axis direction) is a calibration region C used for mass calibration. The opening 12b defines the calibration region C of the ionization substrate 11. The opening 12b surrounds the calibration region C when viewed in the Z-axis direction.

The second support body 20 includes a support substrate 21, an adhesive layer 22, and a cover member 23. The support substrate 21 has, for example, a rectangular plate shape. The support substrate 21 has a placement surface 21a. The placement surface 21a is a flat surface in an X-Y plane. The placement surface 21a has a first region 21b and second regions 22c.

The first region 21b is positioned at a central portion of the placement surface 21a when viewed in the Z-axis direction. When viewed in the Z-axis direction, both ends of the first region 21b in the X-axis direction are positioned inside both ends of the placement surface 21a in the X-axis direction. When viewed in the Z-axis direction, both ends of the first region 21b in the Y-axis direction match both ends of the placement surface 21a in the Y-axis direction. The first region 21b is used for mounting a sample S to be described below.

The second region 21c is positioned at an end portion of the placement surface 21a when viewed in the Z-axis direction. The second regions 21c are positioned on both sides with respect to the first region 21b when viewed in the Z-axis direction. That is, the placement surface 21a includes two second regions 21c. The second regions 21c are regions except the first region 21b in the placement surface 21a.

The second region 21c has conductivity. The second region 21c is formed of, for example, a metal film. The second region 21c is made of, for example, aluminum deposited on a surface of a base member of the support substrate 21. In the present embodiment, the first region 21b is configured of the surface of the base member, and the second region 21c is configured of a surface of the metal film. A portion of the support substrate 21 including the first region 21b has optical transparency. Specifically, the base member of the support substrate 21 is transparent to, for example, ultraviolet light, visible light, or the like. The base member of the support substrate 21 is, for example, a slide glass.

The adhesive layer 22 is provided on the placement surface 21a. The adhesive layer 22 has a first portion 24 and a second portion 25. The first portion 24 is provided in the first region 21b. The first portion 24 extends over a wide range in the first region 21b. When viewed in the Z-axis direction, an edge of the first portion 24 is positioned inside an edge of the first region 21b. The first portion 24 has, for example, a rectangular shape when viewed in the Z-axis direction. The first portion 24 has optical transparency. The first portion 24 is transparent to, for example, ultraviolet light, visible light, or the like. The first portion 24 is made of, for example, an acrylic adhesive.

The second portion 25 is formed as a separate portion from the first portion. The second portion 25 is separated from the first portion 24. The second portions 25 are positioned on both sides in the X-axis direction with respect to the first portion 24 when viewed in the Z-axis direction. That is, the adhesive layer 22 has two second portions 25. The second portion 25 is provided in both the first region 21b and the second region 21c. That is, the second portion 25 straddles the first region 21b and the second region 21c. In other words, the second portion 25 extends from the first region 21b to the second region 21c.

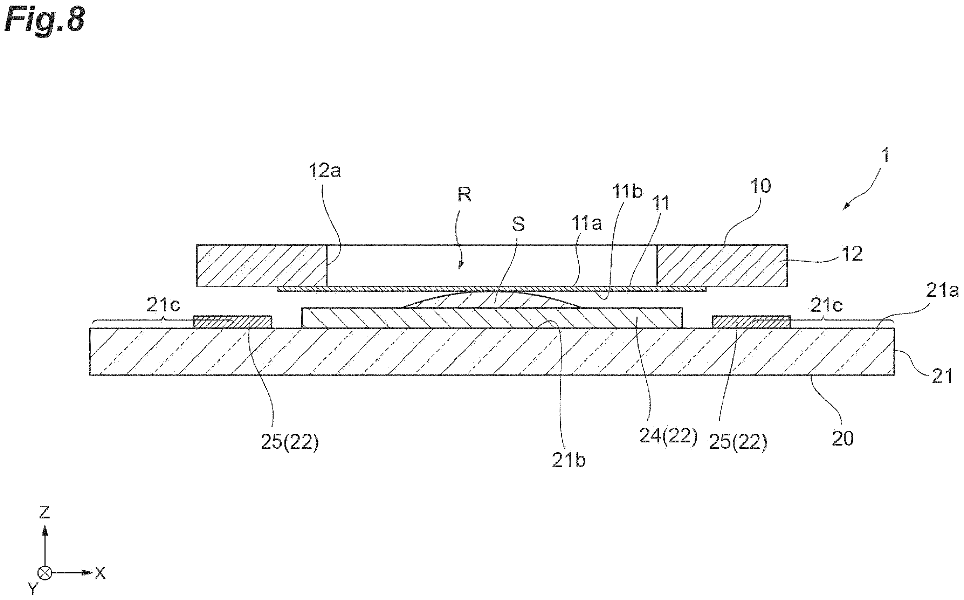

The second portion 25 has, for example, a rectangular shape extending in the Y-axis direction when viewed in the Z-axis direction. A surface of the second portion 25 is positioned on the support substrate 21 side with respect to a surface of the first portion 24. That is, a thickness of the second portion 25 is smaller than a thickness of the first portion 24 (see FIG. 8). The second portion 25 has conductivity. The second portion 25 is made of, for example, an acrylic adhesive containing conductive particles.

The cover member 23 covers at least the adhesive layer 22. In the present embodiment, the cover member 23 covers all over the adhesive layer 22 and the placement surface 21a of the support substrate 21. The cover member 23 protects the adhesive layer 22 and the placement surface 21a. The cover member 23 is, for example, a protective film. The cover member 23 is peeled off when the second support body 20 is used. Note that the cover member 23 is illustrated only in FIG. 1.

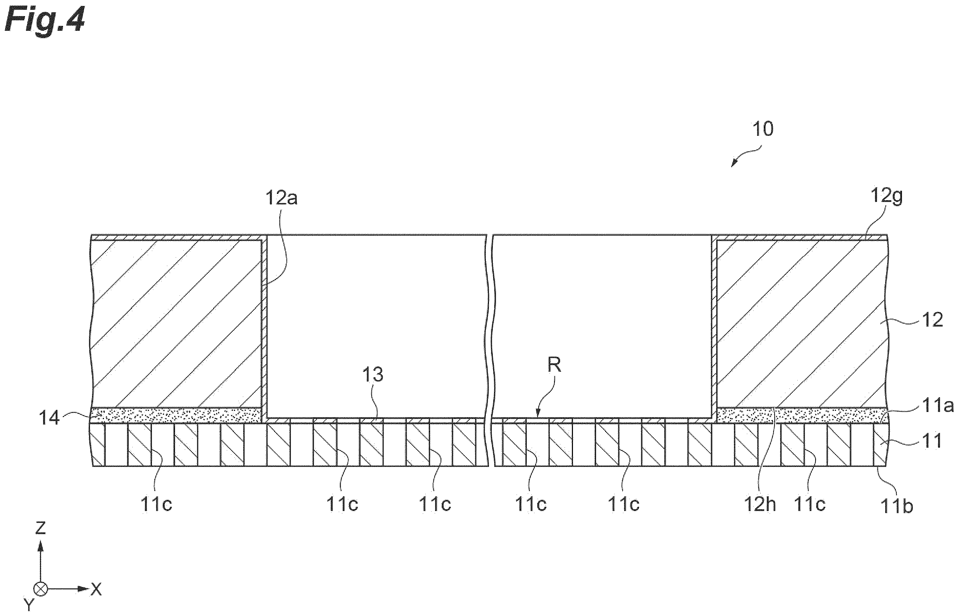

The second support body 20 is disposed to allow the placement surface 21a to face a second surface 11b (see FIG. 4) of the ionization substrate 11 opposite to the frame 12. Hereinafter, a positional relationship between individual members will be described in a case where the first support body 10 and the second support body 20 are disposed to face each other.

The first region 21b of the placement surface 21a overlaps the measurement region R of the ionization substrate 11 when viewed in the Z-axis direction (direction orthogonal to the placement surface 21a). An edge of the first region 21b is positioned outside an edge of the measurement region R when viewed in the Z-axis direction. The edge of the first region 21b is positioned outside an edge of the ionization substrate 11 when viewed in the Z-axis direction.

The second region 21c is positioned outside the edge of the ionization substrate 11 when viewed in the Z-axis direction. A boundary line between the first region 21b and the second region 21c is positioned between the edge of the ionization substrate 11 and an edge of the frame 12 when viewed in the Z-axis direction. The second region 21c includes a region which overlaps the frame 12 and a region which does not overlap the first support body 10, when viewed in the Z-axis direction. The region of the second region 21c that does not overlap the first support body 10 is used for voltage application.

The first portion 24 of the adhesive layer 22 overlaps the measurement region R when viewed in the Z-axis direction. The edge of the first portion 24 is positioned outside the edge of the measurement region R when viewed in the Z-axis direction. The edge of the first portion 24 is positioned inside the edge of the ionization substrate 11 when viewed in the Z-axis direction. The first portion 24 does not overlap the calibration region C when viewed in the Z-axis direction.

The second portion 25 of the adhesive layer 22 is positioned outside the ionization substrate 11 when viewed in the Z-axis direction. The second portion 25 overlaps the frame 12 when viewed in the Z-axis direction. The second portion 25 does not overlap the calibration region C when viewed in the Z-axis direction. That is, the adhesive layer 22 is not provided in a region of the placement surface 21a which overlaps the calibration region C when viewed in the Z-axis direction.

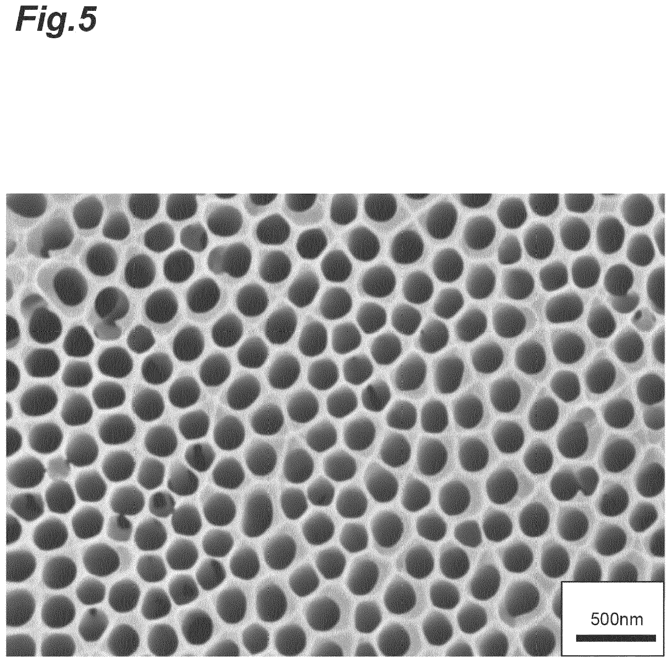

[Configuration of First Support Body] Next, the first support body 10 will be described in detail with reference to FIGS. 4 and 5. The first support body 10 is an ionization support substrate used for ionizing a sample. As illustrated in FIG. 4, the ionization substrate 11 has a first surface 11a and a second surface 11b opposite to the first surface 11a. In the ionization substrate 11, a plurality of through-holes 11c are formed uniformly (in a uniform distribution). Each of the through-holes 11c extends in the Z-axis direction (thickness direction of the ionization substrate 11) and is opened to the first surface 11a and the second surface 11b. That is, each through-hole 11c penetrates the ionization substrate 11. The first surface 11a is a surface irradiated with an energy ray such as a laser beam in a step of ionizing a component of the sample.

A thickness of the ionization substrate 11 is, for example, about 1 µm to 50 µm. As an example, the thickness of the ionization substrate 11 is 5 µm to 50 µm. A shape of the through-hole 11c when viewed in the Z-axis direction is, for example, a substantially circular shape. A width of the through-hole 11c is, for example, about 1 nm to 700 nm. The ionization substrate 11 is formed of an insulating material.

The width of the through-hole 11c is a value acquired as follows. First, images of the first surface 11a and the second surface 11b of the ionization substrate 11 are acquired. FIG. 5 illustrates an example of an SEM image of a part of the first surface 11a of the ionization substrate 11. In the SEM image, a black portion indicates the through-hole 11c, and a white portion indicates a partition wall portion between the through-holes 11c. Subsequently, for example, binarization processing is performed on the acquired image of the first surface 11a to extract a plurality of pixel groups corresponding to a plurality of first openings (openings on the first surface 11a side of the through-hole 11c) in the measurement region R, and a diameter of a circle having an average area of the first openings is acquired on the basis of a size per pixel. Similarly, for example, binarization processing is performed on the acquired image of the second surface 11b to extract a plurality of pixel groups corresponding to a plurality of second openings (openings on the second surface 11b side of the through-hole 11c) in the measurement region R, and a diameter of a circle having an average area of the second openings is acquired based on a size per pixel. Here, an average value of the diameter of the circle acquired for the first surface 11a and the diameter of the circle acquired for the second surface 11b is acquired as the width of the through-hole 11c.

As illustrated in FIG. 5, the plurality of through-holes 11c having a substantially constant width are uniformly formed in the ionization substrate 11. Sizes of the plurality of through-holes 11c may be different from each other. The through-holes 11c adjacent to each other may be connected to each other. The ionization substrate 11 illustrated in FIG. 5 is an alumina porous film formed by anodizing a valve metal (for example, aluminum (A1)). For example, when an A1 substrate is subjected to anodization, a surface portion of the Al substrate is oxidized, and a plurality of pores (portions to become the through-holes 11c) are formed in the surface portion of the Al substrate. Subsequently, the oxidized surface portion (anode oxide film) is peeled off from the Al substrate, and the peeled anode oxide film is subjected to a pore widening process for widening the pores, and thereby the above-described ionization substrate 11 is obtained. Note that the ionization substrate 11 may be formed by anodizing a valve metal other than Al or may be formed by anodizing silicon (Si). Examples of valve metals other than Al include tantalum (Ta), niobium (Nb), titanium (Ti), hafnium (Hf), zirconium (Zr), zinc (Zn), tungsten (W), bismuth (Bi), antimony (Sb), and the like.

The frame 12 is disposed on the first surface 11a of the ionization substrate 11. The frame 12 holds the ionization substrate 11 on the first surface 11a side. The frame 12 has a first surface 12h facing the first surface 11a and a second surface 12g opposite to the first surface 12h. Each of the first surface 12h and the second surface 12g is a flat surface in the X-Y plane. The opening 12a and the opening 12b are opened to the first surface 12h and the second surface 12g. As described above, the opening 12a defines the measurement region R, and the opening 12b defines the calibration region C.

Since the plurality of through-holes 11c are uniformly formed in the ionization substrate 11, each of the measurement region R and the calibration region C includes a plurality of through-holes 11c. An aperture ratio of the through-holes 11c in the measurement region R (a percentage of the through-holes 11c to the measurement region R when viewed in the Z-axis direction) is practically 10 to 80%, and particularly preferably 30 to 60%. The aperture ratio of the through-holes 11c in the calibration region C is the same as that in the measurement region R.

The frame 12 has conductivity. A material of the frame 12 is, for example, metal. In the present embodiment, the frame 12 is made of a non-magnetic material having acid resistance. Examples of the material include titanium, stainless steel (SUS), and the like. In the present embodiment, the frame 12 is formed of SUS. A thickness of the frame 12 is, for example, 3 mm or less. As an example, the thickness of the frame 12 is 0.2 mm.

A portion of the ionization substrate 11 except the measurement region R and the calibration region C is fixed to the frame 12 by an adhesive layer 14. The adhesive layer 14 is formed between the first surface 11a of the ionization substrate 11 and the first surface 12h of the frame 12. Consequently, since the ionization substrate 11 is supported by the frame 2, handling of the first support body 10 is facilitated, and deformation of the ionization substrate 11 due to a temperature change or the like is suppressed.

The adhesive layer 14 can be made of, for example, an adhesive (for example, low-melting-point glass, a vacuum adhesive, or the like) with low emitted gas. The adhesive layer 14 may be made of a conductive adhesive or may be formed by applying a metal paste. In addition, the adhesive layer 14 may be made of a UV-curable adhesive (photo-curable adhesive), an inorganic binder, or the like. Examples of the UV-curable adhesive include an acrylic adhesive, an epoxy adhesive, and the like. In addition, examples of the inorganic binder include CERAMABOND (registered trademark) manufactured by Audec Corporation, ARON CERAMIC (registered trademark) manufactured by TOAGOSEI CO., LTD., and the like. In the present embodiment, as an example, the adhesive layer 14 is made of the UV-curable adhesive.

The first support body 10 further includes a conductive layer 13. The conductive layer 13 is provided on the first surface 11a of the ionization substrate 11. The conductive layer 13 is continuously (integrally) formed on a region (measurement region R) of the first surface 11a of the ionization substrate 11 corresponding to the opening 12a of the frame 12, an inner surface of the opening 12a, and the second surface 12g of the frame 12. The conductive layer 13 is continuously (integrally) formed on a region (calibration region C) of the first surface 11a of the ionization substrate 11 corresponding to the opening 12b of the frame 12, an inner surface of the opening 12b, and the second surface 12g of the frame 12.

The conductive layer 13 covers a portion of the first surface 11a of the ionization substrate 11 where the through-holes 11c are not formed in each of the measurement region R and the calibration region C. That is, the conductive layer 13 is provided on the first surface 11a so as not to close the through-holes 11c. The through-holes 11c are exposed from the opening 12a and the opening 12b.

The conductive layer 13 is made of a conductive material. The conductive layer 13 is made of a material suitable for mass spectrometry of a sample. Specifically, the conductive layer 13 is made of, for example, platinum (Pt) or gold (Au). As the material of the conductive layer 13, a metal having low affinity (reactivity) with a sample and high conductivity is preferably used for the following reasons.

For example, when the conductive layer 13 is made of a metal such as copper (Cu) having high affinity with a sample such as a protein, the sample is ionized in a state in which Cu atoms are added to sample molecules in a process of ionization of the sample to be described below, and a detection result may be deviated by the amount of the Cu atoms added in the mass spectrometry to be described below. Hence, it is preferable to use a metal having low affinity with a sample, as the material of the conductive layer 13.

On the other hand, the higher the conductivity of a metal, the easier it is to stably apply a constant voltage. Therefore, when the conductive layer 13 is made of a metal having high conductivity, a voltage can be uniformly applied to the first surface 11a of the ionization substrate 11. In addition, a metal having higher conductivity tends to have higher thermal conductivity. Therefore, when the conductive layer 13 is made of a metal having high conductivity, the energy of a laser beam (energy ray) with which the ionization substrate 11 is irradiated can be efficiently transmitted to the sample via the conductive layer 13. Hence, a highly conductive metal is preferably used as the material of the conductive layer 13.

From the above-described viewpoint, for example, Pt, Au, or the like is preferably used as the material of the conductive layer 13. In the present embodiment, the conductive layer 13 is made of Pt. The conductive layer 13 is formed by, for example, vapor deposition, sputtering, or the like. A thickness of the conductive layer 13 is, for example, about 1 nm to 350 nm. As a material of the conductive layer 13, for example, chromium (Cr), nickel (Ni), titanium (Ti), silver (Ag), or the like may be used.

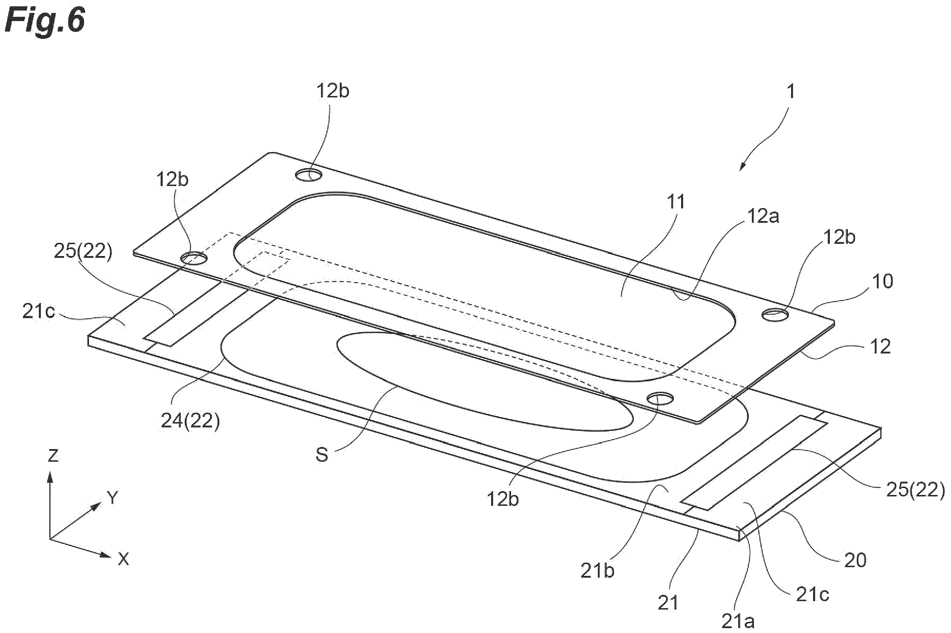

Next, a case where the sample S is placed on the second support body 20 will be described with reference to FIGS. 6 to 9. As illustrated in FIG. 6, the sample S is placed on the first portion 24 of the adhesive layer 22. An area of the sample S is smaller than an area of the first portion 24. That is, when the sample S is placed on the first portion 24, a part of the first portion 24 is exposed. In the present embodiment, the sample S is placed on a central portion of the first portion 24, and a portion of the first portion 24 is exposed, the portion surrounding the sample S. The sample S is, for example, a biological sample. The sample S is, for example, a section of liver of an animal, a plant, or the like. The sample S is a water-containing sample.

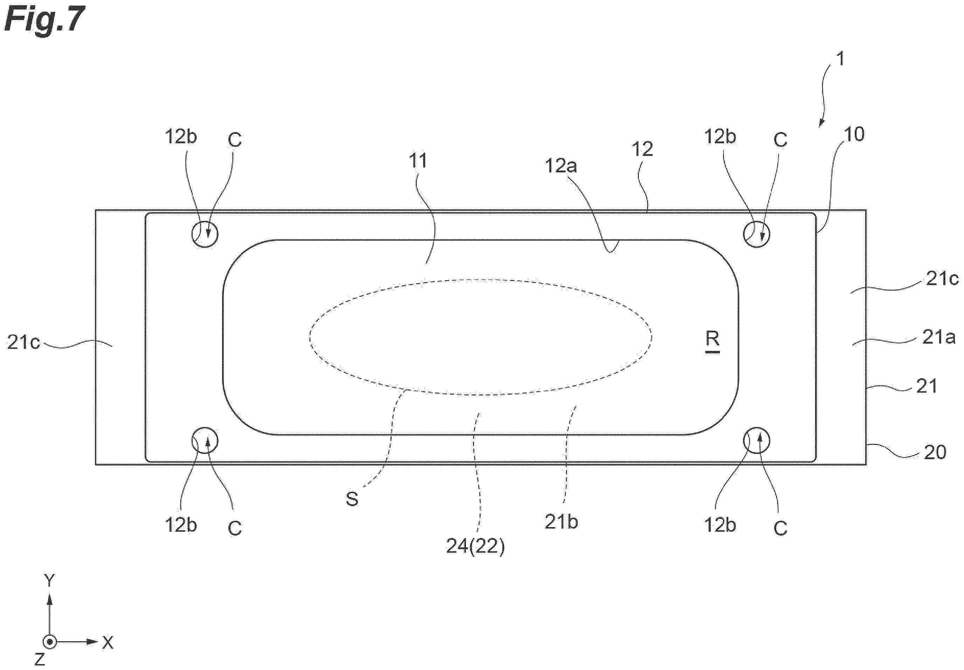

As illustrated in FIG. 7, the sample S is surrounded by the opening 12a when viewed in the Z-axis direction. The measurement region R of the first support body 10 overlaps exposed portions of the sample S and the first portion 24 when viewed in the Z-axis direction.

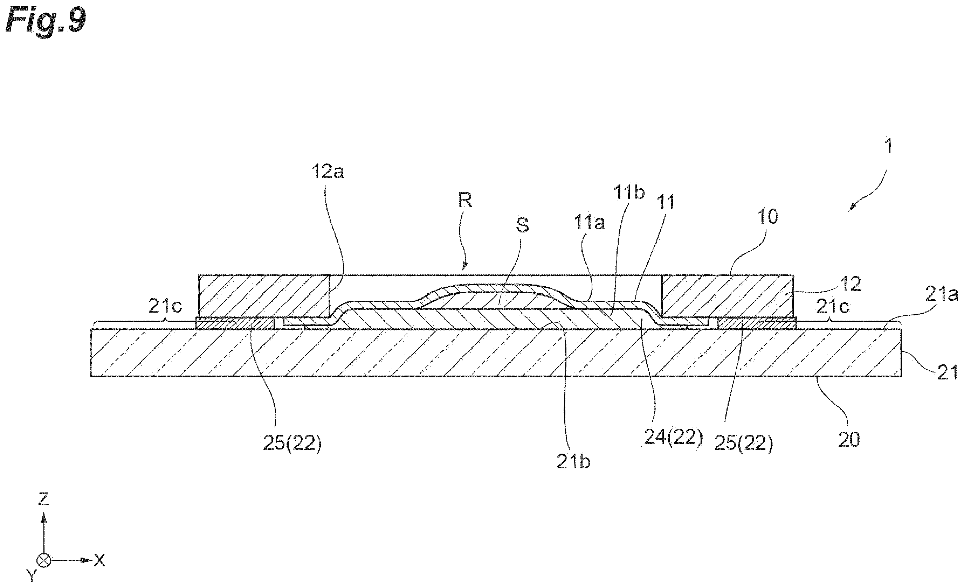

As illustrated in FIG. 8, a portion of the frame 12 positioned outside the ionization substrate 11 overlaps the second portion 25 of the adhesive layer 22 when viewed in the Z-axis direction. As illustrated in FIG. 9, when the first support body 10 is pressed against the second support body 20, a portion of the ionization substrate 11 overlapping the sample S comes into contact with the sample S and is fixed to the sample S due to an action of moisture contained in the sample S. In addition, when the first support body 10 is pressed against the second support body 20, a portion of the ionization substrate 11 that does not overlap the sample S adheres to the exposed portion of the first portion 24. The frame 12 adheres to the second portion 25 of the adhesive layer 22. Consequently, the second portion 25 electrically connects the second region 21c of the placement surface 21a and the frame 12, thereby electrically connecting the second region 21c and the conductive layer 13.

Since the thickness of the second portion 25 is smaller than the thickness of the first portion 24, a portion of the first portion 24 overlapping the frame 12 becomes thinner by pressing of the frame 12 in a state in which the frame 12 adheres to the second portion 25. Consequently, the ionization substrate 11 reliably adheres to the first portion 24.

[Mass Spectrometry Method] Next, an example of a mass spectrometry method (including an ionization method) using the support unit 1 will be described with reference to FIGS. 8 to 10. First, the first support body 10 described above is prepared (first step). Subsequently, the second support body 20 described above is prepared (second step). The order of the first step and the second step may be changed.

Subsequently, as illustrated in FIG. 8, the sample S is placed on the adhesive layer 22 (third step). Specifically, in the third step, the sample S is placed on the first portion 24 such that a part of the first portion 24 of the adhesive layer 22 is exposed. Subsequently, the first support body 10 is disposed on the sample S such that the second surface 11b faces the sample S (fourth step). Specifically, in the fourth step, the first support body 10 is disposed to allow the measurement region R to overlap the exposed portions of the sample S and the first portion 24 when viewed in the Z-axis direction. As illustrated in FIG. 9, in the fourth step, in the first support body 10, the measurement region R adheres to the exposed portion of the first portion 24. In the fourth step, the frame 12 of the first support body 10 adheres to the second portion 25. That is, in the fourth step, the conductive layer 13 of the first support body 10 and the second region 21c of the placement surface 21a are electrically connected by the second portion 25.

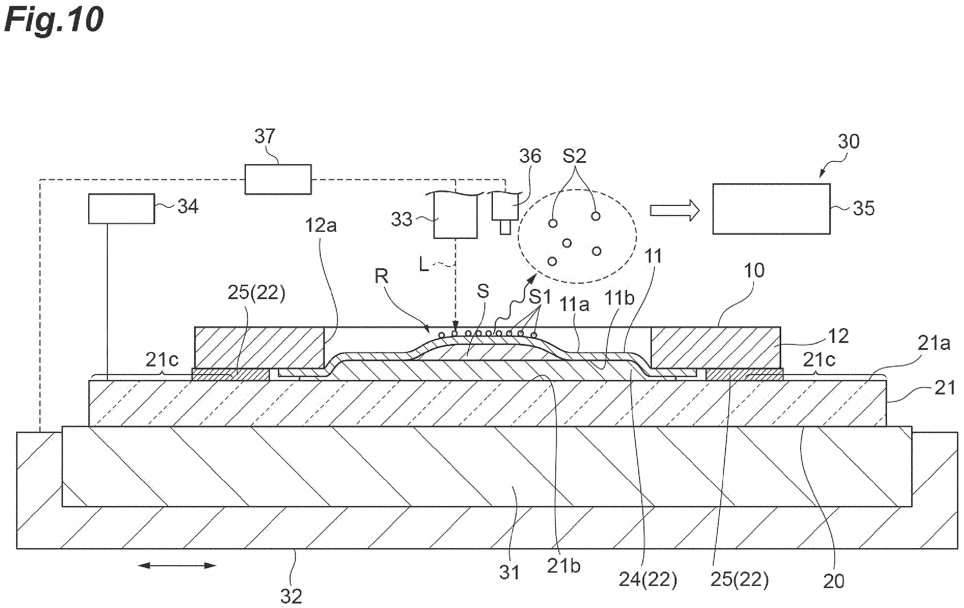

Subsequently, as illustrated in FIG. 10, the support unit 1 in which the sample S is sandwiched is placed on a support 31 of a mass spectrometer 30. The mass spectrometer 30 includes the support 31, a sample stage 32, an irradiation unit 33, a voltage application unit 34, an ion detection unit 35, a camera 36, and a control unit 37. The support 31 is placed on the sample stage 32.

The irradiation unit 33 irradiates the first surface 11a of the first support body 10 with an energy ray such as a laser beam L. The voltage application unit 34 applies a voltage to the first surface 11a of first support body 10. Specifically, the voltage application unit 34 applies a voltage to the second region 21c of the placement surface 21a, thereby applying the voltage to the conductive layer 13 provided on the first surface 11a via the second portion 25 of the adhesive layer 22 and the frame 12. The ion detection unit 35 detects components (sample ions S2) of the ionized sample S. The camera 36 acquires a camera image containing an irradiation position of the laser beam L by the irradiation unit 33. The camera 36 is, for example, a small CCD camera attached to the irradiation unit 33.

The control unit 37 controls operations of the sample stage 32, the irradiation unit 33, the voltage application unit 34, the ion detection unit 35, and the camera 36. The control unit 37 is, for example, a computer device including a processor (for example, a CPU or the like), a memory (for example, a ROM, a RAM, or the like), and the like.

Subsequently, when the first surface 11a is irradiated with the laser beam L while a voltage is applied to the conductive layer 13, components S1 of the sample S are ionized, the components S1 having moved from the second surface 11b side to the first surface 11a side via the through-holes 11c due to the capillary action (fifth step). In the fifth step, the voltage is applied to the conductive layer 13 via the second region 21c of the placement surface 21a and the second portion 25 of the adhesive layer 22.

Subsequently, the control unit 37 operates the irradiation unit 33 on the basis of the image acquired by the camera 36. Specifically, the control unit 37 operates the irradiation unit 33 so that the first surface 11a in a laser irradiation range (for example, a region of the measurement region R where the components S1 identified based on the image acquired by the camera 36 are present) is irradiated with the laser beam L.

As an example, the control unit 37 moves the sample stage 32 and controls an irradiation operation (irradiation timing or the like) of the laser beam L by the irradiation unit 33. That is, the control unit 37 checks that the sample stage 32 has moved at a predetermined interval and then causes the irradiation unit 33 to perform irradiation with the laser beam L. For example, the control unit 37 repeats the movement (scanning) of the sample stage 32 and the irradiation with the laser beam L by the irradiation unit 33 to perform a raster scan within the laser irradiation range. Note that the irradiation position on the first surface 11a may be changed by moving the irradiation unit 33 instead of the sample stage 32 or may be changed by moving both the sample stage 32 and the irradiation unit 33.

As described above, the first surface 11a in the laser irradiation range is irradiated with the laser beam L while a voltage is applied to the conductive layer 13, and thereby the components S1 moved to the first surface 11a side are ionized, and the sample ions S2 (ionized components S1) are emitted as a result. Specifically, the energy is transmitted from the conductive layer 13 that has absorbed the energy of the laser beam L to the components S1 that have moved to the first surface 11a side, and the components S1 that have acquired the energy is vaporized, and charges are acquired to become the sample ions S2 as a result. The above-described steps correspond to an ionization method (as an example, a laser desorption ionization method as part of the mass spectrometry method) of the sample S using the support unit 1.

The emitted sample ions S2 move while accelerating toward a ground electrode (not illustrated) provided between the support unit 1 and the ion detection unit 35. That is, the sample ions S2 move while accelerating toward the ground electrode due to a potential difference generated between the ground electrode and the conductive layer 13 to which the voltage is applied. Here, the sample ions S2 are detected by the ion detection unit 35.

A detection result of the sample ions S2 by the ion detection unit 35 is associated with the irradiation position of the laser beam L. Specifically, the ion detection unit 35 detects the sample ions S2 for each individual position in the laser irradiation range. Consequently, a distribution image (MS mapping data) indicating a mass distribution of the sample S is acquired. Further, a two-dimensional distribution of molecules constituting the sample S can be imaged. That is, mass spectrometry imaging can be performed. In the present embodiment, the mass spectrometer 30 is a mass spectrometer using time-of-flight mass spectrometry (TOF-MS).

As described above, in the support unit 1, the adhesive layer 22 has the first portion 24 provided in the first region 21b overlapping the measurement region R when viewed in the Z-axis direction. Therefore, the sample S is placed on the first portion 24 such that a part of the first portion 24 is exposed, and the first support body 10 can be disposed on the sample S such that the second surface 11b of the measurement region R faces the sample S, and the measurement region R adheres to the exposed part of the first portion 24. Consequently, the measurement region R can be fixed not only to the sample S but also to the first portion 24 of the adhesive layer 22. Hence, even if the ionization substrate 11 becomes thinner and the ionization substrate 11 becomes susceptible to damage as a result, scattering of the damaged ionization substrate 11 from the sample S and the adhesive layer 22 is suppressed. In addition, the second region 21c of the placement surface 21a has conductivity and includes a region that does not overlap the first support body 10. The second portion 25 of the adhesive layer 22 has conductivity and electrically connects the second region 21c and the conductive layer 13 of the first support body 10. Therefore, the first surface 11a is irradiated with the laser beam L while a voltage is applied to the conductive layer 13 via the second region 21c and the second portion 25, and thereby the components S1 of the sample S moved from the second surface 11b side to the first surface 11a side via the through-holes 11c due to the capillary action can be ionized. As an example, it is also conceivable to apply a voltage to the conductive layer 13 by bringing a terminal or the like for applying the voltage into contact with the conductive layer 13. In comparison with that case, according to the above-described configuration, since the voltage is applied to the conductive layer 13 via the second region 21c and the second portion 25, damage to the ionization substrate 11 is suppressed, even if the ionization substrate 11 becomes thinner and the ionization substrate 11 becomes susceptible to damage as a result. In addition, the frame 12 adheres to the support substrate 21 by the adhesive layer 22, and thereby warpage of the frame 12 can be suppressed. As described above, according to this support unit 1, handling of the ionization substrate 11 can be facilitated.

The first portion 24 and the second portion 25 of the adhesive layer 22 are formed as separate portions. The first portion 24 and the second portion 25 are separated from each other. Consequently, a degree of freedom in designing each of the first portion 24 and the second portion 25 is improved.

A surface of the second portion 25 is positioned on the support substrate 21 side with respect to a surface of the first portion 24. Consequently, the measurement region R of the ionization substrate 11 can reliably adhere to the first portion 24.

Each of the support substrate 21 and the first portion 24 may have optical transparency. Consequently, the sample S placed on the first portion 24 can be easily observed. For example, a transmission image of a beam with which the support substrate 21 is irradiated from a side opposite to the first portion 24 is acquired, and thereby a present range or the like of the sample S can be observed.

The ionization substrate 11 has the calibration region C used for calibration. The adhesive layer 22 is not provided in a region of the placement surface 21a which overlaps the calibration region C when viewed in the Z-axis direction. Consequently, for example, when a reagent for calibration is dropped in the calibration region C, and then the reagent is ionized, generation of noise due to the adhesive layer 22 can be suppressed.

The second support body 20 includes the cover member 23 configured to cover at least the adhesive layer 22. Consequently, the adhesive layer 22 can be protected.

The first support body 10 includes the frame 12 that is disposed on the first surface 11a of the ionization substrate 11 and has the opening 12a surrounding the measurement region R. The ionization substrate 11 is formed by anodizing the valve metal or silicon. Consequently, the frame 12 enables the ionization substrate 11 to be reinforced while defining the measurement region R of the ionization substrate 11.

The second region 21c of the placement surface 21a is formed of a metal film. Consequently, the conductivity of the second region 21c can be easily ensured.

The first region 21b is positioned at the central portion of the placement surface 21a. The second region 21c is positioned at the end portion of the placement surface 21a. Consequently, it is possible to appropriately secure a space (second region 21c) used for applying the voltage while prioritizing the securing of the space (first region 21b) used for the first portion 24 of the adhesive layer 22 and the sample S.

In the third step of the ionization method, the sample S is placed on the first portion 24 so that a part of the first portion 24 of the adhesive layer 22 is exposed, and in the fourth step, the first support body 10 is disposed to allow the measurement region R to adhere to the exposed portion of the first portion 24. Consequently, the measurement region R can be fixed not only to the sample S but also to the first portion 24 of the adhesive layer 22. Hence, even if the ionization substrate 11 becomes thinner and the ionization substrate 11 becomes susceptible to damage as a result, scattering of the damaged ionization substrate 11 from the sample S and the adhesive layer 22 is suppressed. In addition, in the fourth step, the first support body 10 is disposed to allow the conductive layer 13 and the second region 21c to be electrically connected by the second portion 25, and in the fifth step, the voltage is applied to the second region 21c. Consequently, the voltage can be applied to the conductive layer 13 via the second region 21c and the second portion 25. As an example, it is also conceivable to apply a voltage to the conductive layer 13 by bringing a terminal or the like for applying the voltage into contact with the conductive layer 13. In comparison with that case, according to the above-described steps, since the voltage is applied to the conductive layer 13 via the second region 21c and the second portion 25, damage to the ionization substrate 11 is suppressed, even if the ionization substrate 11 becomes thinner and the ionization substrate 11 becomes susceptible to damage as a result. In addition, in the fourth step, the frame 12 adheres to the support substrate 21 by the adhesive layer 22, and thereby warpage of the frame 12 can be suppressed. As described above, according to this ionization method, handling of the ionization substrate 11 can be facilitated.

[Modification Examples] Although the embodiments of the present disclosure have been described above, the present disclosure is not limited to the above-described embodiments.

The example in which the first region 21b of the placement surface 21a is configured of a surface of a slide glass, and the second region 21c is configured of a surface of a metal film formed on the surface of the slide glass is described. The placement surface 21a of the support substrate 21 may be formed of a transparent conductive film. The transparent conductive film is, for example, an indium tin oxide (ITO) film. In this case, both the first region 21b and the second region 21c of the placement surface 21 a are configured of a surface of the transparent conductive film, and both the first region 21b and the second region 21c have conductivity. According to this configuration, it is possible to easily ensure the conductivity of the placement surface 21a and the optical transparency of the first region 21b.

Although the example in which the first portion 24 and the second portion 25 of the adhesive layer 22 are formed as separate portions has been described, the first portion 24 and the second portion 25 may be integrally formed. That is, one adhesive layer 22 may be provided on the placement surface 21a. At least the second portion 25 of the adhesive layer 22 may have conductivity. The entire adhesive layer 22 may have conductivity. In this case, the adhesive layer 22 may be integrally formed of the same material.

Although the example in which the sample S is a water-containing sample is described, the sample S may be a dry sample. In this case, after the first support body 10 is disposed on the sample S, for example, a solution or the like is dropped onto the first surface 11a. The components S1 of the sample S are mixed with the solution and move from the second surface 11b side to the first surface 11a side via the through-holes 11c. The measurement region R of the ionization substrate 11 is fixed to the sample S by the action of the solution.

The conductive layer 13 may be provided at least on the first surface 11a. The conductive layer 13 may also be provided on, for example, the second surface 2b in addition to the first surface 11a or may be provided on the entire or a part of an inner surface of each hole 2c.

The mass spectrometer 30 may be a scanning mass spectrometer or a projection mass spectrometer. In the case of the scanning type, a signal of one pixel having a size corresponding to a spot diameter of the laser beam L is acquired whenever the irradiation unit 33 performs irradiation with the laser beam L once. That is, scanning (change of the irradiation position) and irradiation with the laser beam L are performed for each pixel. On the other hand, in the case of the projection type, a signal of an image (a plurality of pixels) corresponding to the spot diameter of the laser beam L is acquired whenever the irradiation unit 33 performs irradiation with the laser beam L once. In the case of the projection type, when the entire measurement region R is included in the spot diameter of the laser beam L, the mass spectrometry imaging can be performed by the irradiation with the laser beam L once. Note that, in the case of the projection type, when the entire measurement region R is not included in the spot diameter of the laser beam L, a signal of the entire measurement region R can be acquired by performing scanning and irradiation with the laser beam L similarly to the scanning type. In addition, the ionization method described above can also be used for other measurements and experiments such as ion mobility measurement.

The use of the sample support body is not limited to ionization of a sample by irradiation with a laser beam L. The sample support body can be used for ionization of a sample by irradiation with an energy ray such as a laser beam, an ion beam, or an electron beam. In the ionization method and the mass spectrometry method described above, the sample can be ionized by irradiation with the energy ray.

### Reference Signs List

- 1: support unit
- 10: first support body
- 11: ionization substrate
- 11a: first surface
- 11b: second surface
- 11c: through-hole
- 12: frame (holding member)
- 12a: opening
- 13: conductive layer
- 20: second support body
- 21: support substrate
- 21a: placement surface
- 21b: first region
- 21c: second region
- 22: adhesive layer
- 23: cover member
- 24: first portion
- 25: second portion
- C: calibration region
- R: measurement region
- S: sample

## Claims

1. A support unit used for ionization of a sample, the support unit comprising:
a first support body configured to include an ionization substrate having a first surface and a second surface opposite to the first surface and having a measurement region provided with a plurality of through-holes opened to the first surface and the second surface, and a conductive layer provided on the first surface so as not to block the plurality of through-holes; and
a second support body disposed to face the second surface of the first support body, wherein
the second support body includes a support substrate having a placement surface facing the second surface, and an adhesive layer provided on the placement surface,
the placement surface has
a first region configured to overlap the measurement region when viewed in a direction orthogonal to the placement surface, and
a second region having conductivity and including a region configured not to overlap the first support body when viewed in the direction orthogonal to the placement surface, and
the adhesive layer has
a first portion provided in the first region, and
a second portion having conductivity and electrically connecting the second region and the conductive layer of the first support body.

2. The support unit according to claim 1, wherein
the first portion and the second portion of the adhesive layer are formed as separate portions, and
the first portion and the second portion are separated from each other.

3. The support unit according to claim 2, wherein a surface of the second portion is positioned on the support substrate side, with respect to a surface of the first portion.

4. The support unit according to any one of claims 1 to 3, wherein each of the support substrate and the first portion has optical transparency.

5. The support unit according to any one of claims 1 to 4, wherein
the ionization substrate has a calibration region used for calibration, and
the adhesive layer is not provided in a region of the placement surface which overlaps the calibration region when viewed in the direction orthogonal to the placement surface.

6. The support unit according to any one of claims 1 to 5, wherein the second support body further includes a cover member configured to cover at least the adhesive layer.

7. The support unit according to any one of claims 1 to 6, wherein
the first support body further includes a holding member configured to be disposed on the first surface of the ionization substrate and have an opening surrounding the measurement region, and
the ionization substrate is formed by anodizing valve metal or silicon.

8. A support body used for ionization of a sample, the support body comprising:
a support substrate having a placement surface; and
an adhesive layer provided on the placement surface, wherein
the placement surface has a first region used for placing the sample and a second region having conductivity, and
the adhesive layer has a first portion provided in the first region and a second portion configured to have conductivity and extend to the second region.

9. The support body according to claim 8, wherein
the first portion and the second portion of the adhesive layer are formed as separate portions, and
the first portion and the second portion are separated from each other.

10. The support body according to claim 8 or 9, wherein the second region of the placement surface is formed of a metal film.

11. The support body according to claim 8 or 9, wherein the placement surface is formed of a transparent conductive film.

12. The support body according to any one of claims 8 to 11, wherein
the first region is positioned at a central portion of the placement surface, and
the second region is positioned at an end portion of the placement surface.

13. The support body according to any one of claims 8 to 12, wherein each of the support substrate and the first portion has optical transparency.

14. An ionization method comprising:
a first step of preparing a first support body configured to include an ionization substrate having a first surface and a second surface opposite to the first surface and having a measurement region provided with a plurality of through-holes opened to the first surface and the second surface, and a conductive layer provided on the first surface so as not to block the plurality of through-holes;
a second step of preparing a second support body configured to include a support substrate having a placement surface, and an adhesive layer provided on the placement surface;
a third step of placing a sample on the adhesive layer;
a fourth step of disposing the first support body on the sample such that the second surface faces the sample; and
a fifth step of irradiating the first surface with an energy ray while a voltage is applied to the conductive layer to ionize a component of the sample that has moved from the second surface side to the first surface side via the through-hole due to capillary action, wherein
the placement surface of the support substrate prepared in the second step has a first region configured to overlap the measurement region when viewed in a direction orthogonal to the placement surface, and a second region having conductivity and including a region configured not to overlap the first support body when viewed in the direction orthogonal to the placement surface,
the adhesive layer prepared in the second step has a first portion provided in the first region and a second portion having conductivity and electrically connecting the second region and the conductive layer of the first support body,
in the third step, the sample is placed on the first portion such that a part of the first portion of the adhesive layer is exposed,
in the fourth step, the first support body is disposed to allow the measurement region to adhere to an exposed portion of the first portion and allow the conductive layer and the second region to be electrically connected by the second portion, and
in the fifth step, a voltage is applied to the second region.
